# EUROPEAN PATENT APPLICATION

(11) **EP 4 342 702 A1**
(43) Date of publication of application: **27.03.2024**
(21) Application number: 22196874.6
(22) Date of filing: 21.09.2022
(51) Int. Cl.: B60K 1/04, B60K 1/00

(54) **VEHICULAR ENERGY STORAGE UNIT**

(71) Applicant: Nemak, S.A.B. de C.V., 66017 García, Nuevo León (MX)
(72) Inventor: BISCHOFF, Thomas, 80639 München (DE); BYCZYNSKI, Glenn, Edwin, N8N 2M1 Tecuumseh Ontario (CA); DAPHALE, Vijay, Bajirao, 48307 Michigan (US); KOCH, Tammo, 65195 Wiesbaden (DE); LEFEVRE, Justin, 48103 Michigan (US); LIST, Sascha,Florian, 65510 Idstein (DE); SCHEIL, Dr. Jan, 65185 Wiesbaden (DE); MÜLLER, Andreas, 65429 Rüsselsheim (DE); NITZ, Julia, 63225 Langen (DE)
(74) Representative: Cohausz & Florack

(57) **Abstract**

The invention relates to an Energy storage unit (4) for a vehicle, in particular for an electric vehicle, comprising: a plurality of battery modules (12), wherein the plurality of battery modules (12) is preferably substantially leak tight; at least one support structure (2) for mounting the plurality of battery modules (12) on the support structure (2), wherein the support structure (2) is detachably connectable to at least one battery compartment (36) of the vehicle; and at least one bottom plate (32) for closing the at least one battery compartment (36) towards a bottom side (30). The invention also relates to a mounting arrangement and an electric vehicle (38).

## Description

The present invention relates to an energy storage unit for a vehicle, in particular for an electric vehicle, comprising a plurality of battery modules, wherein the plurality of battery modules is substantially leak tight; at least one support structure for mounting the plurality of battery modules on the support structure, wherein the support structure is detachably connectable to at least one battery compartment of the vehicle and; at least one bottom plate for closing the at least one battery compartment towards a bottom side, in particular in the direction of the roadway in the intended use of the energy storage in a vehicle. The present invention also relates to a mounting arrangement for a vehicle, in particular for an electric vehicle and to an electric vehicle.

Electric vehicles generally carry a plurality of battery modules comprising battery cells that serve as a drive energy storage and provide the electrical energy required for driving. In particular, an electric vehicle may be an electric vehicle which is driven substantially exclusively by one or more electric motors. Alternatively, the aforementioned energy storage unit or mounting arrangement may be also used in a hybrid vehicle that has an internal combustion engine in addition to an electric motor.

Since battery modules regularly have a relative high weight, their placement in the vehicle not only requires a certain support structure of the vehicle from a static point of view, but also additionally influences the dynamic forces occurring during driving the vehicle.

With regard to an improved driving behavior, placing the plurality of driving modules in the floor area of the vehicle has proven to be an effective solution. To make this possible, battery modules have been proposed that are essentially flat and plate-like.

Such battery modules may be arranged in the floor area of the vehicle and connected to the vehicle body.

Considerable demands are therefore placed on the static and dynamic load capacity of an energy storage unit or mounting device, in particular the support structure holding the plurality of battery modules. The energy storage unit or mounting device should not only be able to support the individual battery modules, but also absorb the dynamic loads that occur when the vehicle is in motion. The support structure should also provide the best possible protection for the easily flammable battery modules in the event of an accident and preferably enable a leak tight sealing of the battery cells inside the plurality of battery modules.

Additionally, especially for reliably maintaining and repairing the plurality of battery modules, it is preferably that the energy storage unit or the mounting device enables an easy access to the plurality of battery modules.

Therefore, the present invention is faced with the problem of providing an energy storage unit, a mounting arrangement for a vehicle and an electric vehicle which allows for a beneficial mounting of the plurality of battery modules while enabling a reliable protection of the plurality of battery modules. Additionally, the plurality of battery modules shall be accessed for maintenance and repair in an advantageous manner.

According to a first aspect of the present invention, said problem is solved by an energy storage unit, wherein the energy storage unit comprises a plurality of battery modules, wherein the plurality of battery modules is substantially leak tight; at least one support structure for mounting the plurality of battery modules on the support structure, wherein the support structure is detachably connectable to at least one battery compartment of the vehicle and; at least one bottom plate for closing the at least one battery compartment towards a bottom side; characterized in that; the at least one support structure further comprises at least one support frame for arranging the plurality of battery modules substantially between the at least one support frame and the at least one battery compartment.

According to a second aspect of the invention, there is disclosed a mounting arrangement for a vehicle, in particular for an electric vehicle, comprising at least one aforementioned energy storage unit and at least one battery compartment.

According to a third aspect of the invention, there is disclosed an electric vehicle comprising at least one aforementioned mounting arrangement.

By arranging the plurality of battery modules substantially between the at least one support frame and the at least one battery compartment, the energy storage unit may be advantageously connected with the at least one battery compartment. In particular, the plurality of battery modules may be initially located on a top side of the support structure, in particular on a top side of the support frame, wherein the plurality of battery modules together with the at least one support structure may be connected to the at least one battery compartment. This may enable an advantageous maintenance and repair of the plurality of battery modules.

The at least one bottom plate may be connected with sides or walls, in particular with side walls, of the battery compartment for closing the at least one battery compartment towards a bottom side. The bottom side may preferably be the side of the at least one battery compartment which is directed to a bottom or a floor side of the vehicle. In general it is preferred that all geometric prepositions used in this application refer to the intended use of the energy storage unit, the mounting arrangement and/or the electric vehicle. The bottom plate may serve as a protection plate for protection the plurality of battery modules from stone chipping or other damage during use.

Preferably, the bottom plate is connected detachably to the at least one support structure and/or the at least one battery compartment. This allows for an easy access to the plurality of battery modules and the bottom plate may be easily exchanged if it is damaged.

Preferably, the plurality of battery modules is substantially leak tight. Leak tight in particular means that liquid substantially is prevented from being exchanged between the outside and the inside of the plurality of battery modules.

Preferably, the at least one bottom plate is of non-metallic, in particular of plastic or fiber, material. This may allow for a cost effective protection of the bottom plates, wherein they still allows for a sufficient protection of the plurality of battery modules.

The plurality of battery modules may be mounted on the support structure, in particular on the support frame, in several ways. Preferably, the plurality of battery modules is detachably connected to the top side of the at least one support frame of the support structure. Such a detachable connection may be for example provided via a screw connection. Hereby, a defect battery module may be conveniently replaced. Alternatively, the plurality of battery modules may be connected via a material-locking, form-fitting or force-fitting connection, in particular via a welding connection.

The support frame may in particular comprise a substantially rectangular cross-section, wherein the plurality of battery modules preferably is mounted on the top side of the support frame directing towards the battery compartment.

According to an exemplary embodiment of all aspects of the invention, an open space and/or at least one gap, in particular at least one air gap, is arranged between the bottom side of the at least one support structure and the top side of the at least one bottom plate. Preferably, the open space and/or the at least one gap is arranged between the bottom side of the at least one support frame and the top side of the at least one bottom plate. By providing an open space and/or an air gap a deformation, in particular a small deformation, of the bottom plate may not have any effect or at least may not have a sincere effect on the plurality of battery modules. Preferably, the at least one bottom plate is detachably connectable to the at least one battery compartment of the vehicle. Hereby, the bottom plate may be replaced easily. The gap may preferably be an air gap.

According to an exemplary embodiment of all aspects of the invention, the open space and/or gap extends substantially even between the bottom side of the at least one support structure, in particular the bottom side of the at least one support frame, and the top side of the at least one bottom plate. Hereby, a sufficient protection of the plurality of battery modules may be enabled over the total extension of the open space and/or gap. In particular, the open space and/or gap extends substantially along the total extension of the support structure and/or the bottom plate in transverse direction and/or longitudinal direction. Preferably, the open space and/or gap comprises the substantially same distance and/or clearance between the bottom side of the at least one support structure, preferably the bottom side of the at least one support frame, and the top side of the at least one bottom plate.

According to an exemplary embodiment of all aspects of the invention, the open space and/or gap comprises a clearance of 5 mm to 25 mm, preferably a clearance of 7.5 mm to 20 mm, particular preferably a clearance of 10 mm to 15 mm, between the bottom side of the at least one support structure, in particular the bottom side of the at least one support frame, and the top side of the at least one bottom plate. Said clearance has proven to be beneficial with regard to sufficiently protecting the plurality of battery modules, in particular with regard to potential crashes and/or stone chipping.

According to an exemplary embodiment of all aspects of the invention, load-distributing material is arranged between the bottom side of the at least one support structure and the top side of the at least one bottom plate, wherein the load distributing material is preferably at least partly arranged in the open space and/or in the at least one gap. This may allow for an improved protection of the plurality of battery modules. Preferably, the load-distributing material is arranged substantially even along the open space and/or along the at least one gap.

According to an exemplary embodiment of all aspects of the invention, the load-distributing material comprises a foam structure and/or a panel-like structure; and/or the load distributing profile comprises a profile structure, in particular a honeycomb structure. By providing said structure crash-structures may be provided which may beneficially absorb forces in the event of a vehicle accident and protect the battery modules accordingly. In particular, the design of the profile structure, preferably as a honeycomb structure, may be beneficially provided via a casting process.

According to an exemplary embodiment of all aspects of the invention, the at least one support structure further comprises at least one longitudinal profile, wherein the at least one longitudinal profile preferably comprises at least one passage for arranging at least one cooling channel and/or connecting means for connecting, in particular for electrically connecting, the plurality of the battery modules. Preferably at least one end face of the longitudinal profile comprises a connecting area and/or connection points, e.g. connecting inlets and/or outlets, for connecting the at least one cooling channel and/or the connecting means to the vehicle. Via the at least one longitudinal profile forces in a longitudinal direction, in particular in a longitudinal direction of the vehicle, may be absorbed in a preferable manner. Hence, a rigid support structure may be provided. Preferably, the at least one longitudinal profile is connected to the at least one support frame via a welding connection.

According to an exemplary embodiment of all aspects of the invention, the plurality of battery modules is connected to the at least one passage via connecting channels respectively, wherein the connecting channels preferably extend substantially perpendicular to the at least one passage. Hereby, the plurality of battery modules may be electrically connected or connected to a cooling cycle in a convenient manner.

According to an exemplary embodiment of all aspects of the invention, the at least one support structure comprises at least one cross profile, preferably at least two cross profiles, and, preferably, the at least one longitudinal profile and the at least one cross profile separate the support frame into a plurality of battery cavities for arranging the plurality of battery modules on the support structure. This may allow for a separation between respective battery modules, so that battery modules may be replaced and/or repaired independently. Further, the general stability and rigidity of the energy storage unit may be improved. The cross-profiles may also comprise connecting channels respectively for connecting the plurality of battery modules to the at least one passage. Preferably, the cross-profiles are connected to the at least one longitudinal profile and to the at least one support frame, in particular via welding connections. Further preferably, the cross-profiles, the support frame and the at least one longitudinal profile are cast as one cast part, in particular as an aluminum cast part.

Preferably, the support frame, in particular the support frame, comprising at least one longitudinal profile and/or at least one cross profile is a cast part, in particular a cast part of aluminum or an aluminum alloy. It is further preferred that also the at least one passage, cooling channels, connecting channels and/or connecting means are provided via said cast part. Hereby, a support frame with advantageous mechanical properties may be provided in a cost efficient manner.

According to an exemplary embodiment of all aspects of the invention, at least a part of a bottom floor of the battery cavities is provided by the at least one support frame. Hereby, the plurality of battery modules may be effectively arranged inside the battery cavities and on top of the support frame. Preferably, the battery modules may be respectively arranged on the support frame inside a battery cavity and then connected to the support frame, in particular via a detachable connection, for example a screw connection.

According to an exemplary embodiment of all aspects of the invention, the at least one support structure, in particular at least one profile of the at least one support structure, is detachably connectable to the at least one battery compartment of the vehicle via a screw connection. This in particular enables an advantageous maintenance or repair of the plurality of battery modules since the at least one support structure may be removed together with the battery modules form the battery compartment. Preferably the at least one profile, in particular the at least one longitudinal profile and/or the at least one cross profile comprises at least one through hole for arranging connecting means, in particular screws, in the at least one profile and for connecting the support structure to the at least one battery compartment. Preferably, the at least one battery compartment comprises corresponding openings, in particular opening comprising a thread.

According to an exemplary embodiment of all aspects of the invention, the energy storage unit further comprises at least one sensor for monitoring the status of the at least energy storage unit, in particular for monitoring the status of the at least one bottom plate. Hereby it may be detected if the at least one bottom plate comprises any damage which may result in a not sufficient protection of the plurality of battery modules. In such a case the at least one bottom plate may be exchanged via the detachable connection of the at least one bottom plate to the support structure and/or the battery compartment.

The exemplary embodiments described in this description are also intended to be disclosed with respect to every aspect and in all combinations with one another. In particular, a method step is intended to also disclose respective means for performing the method step. Likewise, means for performing a certain method step are also intended to disclose the respective method step.

Further advantageous exemplary embodiments of the invention are indicated by the following detailed description of a number of practical examples of the present invention, in particular in connection with the figures.

The figures attached to the application, however, are only intended to be used for the purpose of clarification, and not to determine the scope of protection of the invention.

The attached drawings are intended only as examples reflecting the general concept of the present invention. In particular, features shown in the figures should not in any way be considered an essential component part of the invention.

In the following, the invention will be described in more detail with reference to the figures.
- Fig. 1: shows an exemplary embodiment of a support structure and a bottom plate of an energy storing unit in a schematic top view;
- Fig. 2: shows a plurality of battery modules mounted to the exemplary embodiment of Fig. 1 in a schematic top view;
- Fig. 3: shows a schematic side view of an exemplary embodiment of an energy storage unit connected to a battery compartment of a vehicle in an exploded view; and
- Fig. 4: shows a schematic side view of the energy storage unit connected to the battery compartment of Fig. 3 in a non-exploded view.

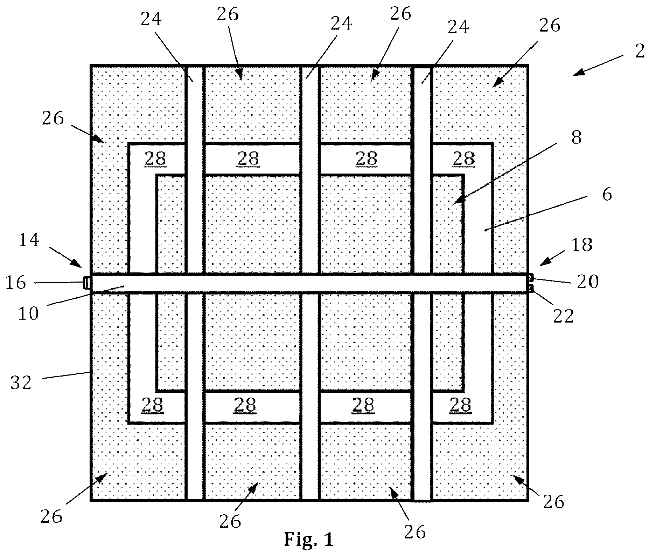

Fig. 1 depicts an exemplary embodiment of a support structure 2 of an energy storage unit 4 in a schematic top view. The support structure 2 comprises a support frame 6, wherein the support frame 6 comprises a substantially rectangular cross-section. Also, the support frame 6 surrounds a substantially rectangular recess 8.

The support structure 2 further comprises a longitudinal profile 10, wherein the longitudinal profile 10 comprises a passage (not shown) for a cooling channel and connecting means for electrically connecting a plurality of battery modules 12. For electrically connecting the plurality of battery modules 12 for example to an electric motor of a vehicle, a first end face 14 of the longitudinal profile 10 comprises an electrical connector 16. Further, for supplying the plurality of battery modules 12 with sufficient cooling, a second end face 18 of the longitudinal profile 10 comprises an inlet 20 and an outlet 22 for a coolant, in particular for tempering liquid.

The support structure 2 further comprises three cross profiles 24, wherein the cross profiles 24 extend substantially perpendicular with regard to the longitudinal profile 10. Preferably, the support frame 6, the longitudinal profile 10 and the cross profiles 24 are one cast part. Alternatively, the different components are preferably welded to each other.

Eight battery cavities 26 are provided between the longitudinal profile 10 and the cross profiles 24 for mounting eight battery modules 12. Said battery modules 12 may be arranged on a bottom floor 28 of the battery cavities 26 which is provided by parts of the support frame 6. A bottom side 30 of the support frame 6 is detachably connected with a bottom plate 32.

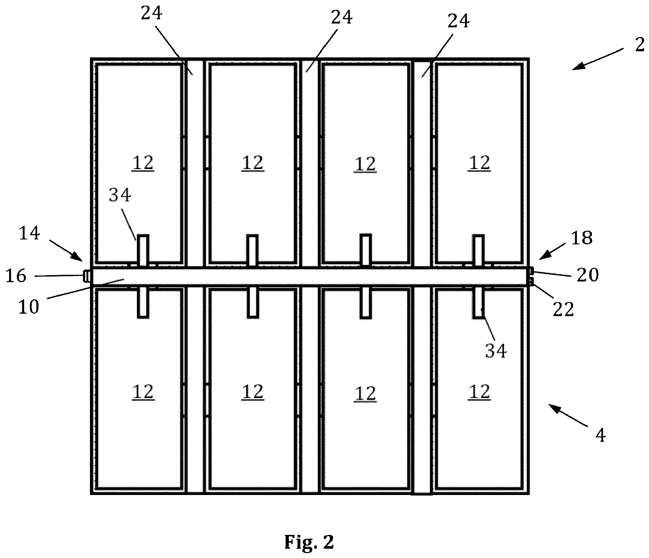

Fig. 2 shows a plurality of battery modules 12 mounted to the exemplary embodiment of Fig. 1 in a schematic top view. The plurality of battery modules 12 is arranged inside the battery cavities 26 on the top side of the support frame 6. Preferably, the battery modules 12 are detachably connected to the support frame 6, in particular via a screw connection (not shown). The battery modules 12 are connected with the passage of the longitudinal profile 10 and hence with the cooling channel and connecting means via connecting channels 34, wherein the connecting channels 34 extend substantially perpendicular to the longitudinal profile 10.

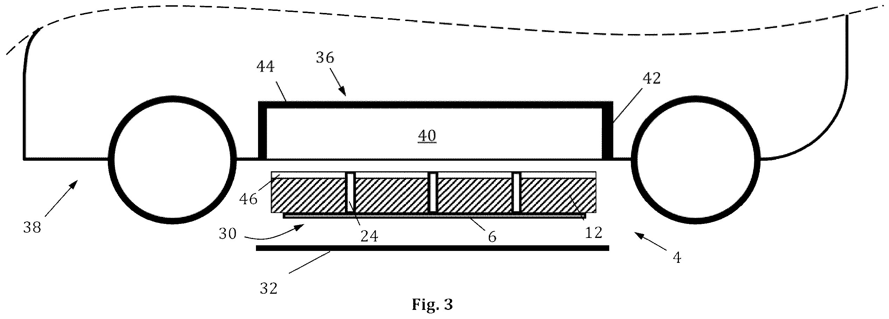

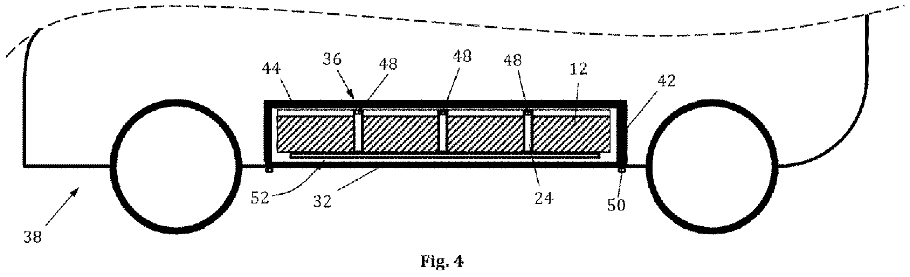

Fig. 3 shows a schematic side view of an exemplary embodiment of an energy storage unit 4 connected to a battery compartment 36 of a vehicle 38 in an exploded view and Fig. 4 shows the same embodiment in a non-exploded view. Only the lower part of the vehicle 38 is shown.

The battery compartment 36 comprises a receiving opening 40 for receiving the energy storing unit 4. Further, the receiving opening 40 is surrounded by a side wall 42 with a substantially rectangular cross-section and a top surface 44 of the battery compartment 36. The top surfaces of the plurality of battery modules 12 comprise cooling means 46 for cooling the plurality of battery modules 12. Preferably, the cooling means 12 are connected to the cooling channel inside the passage of the longitudinal profile 10 via connecting channels 34.

As in particular illustrated in Fig. 4, the support structure 2, in particular the cross profiles 24, are attached via screws 48 to the top surface 44 of the battery compartment 36. Additionally, the bottom plate 32 is attached via screws 50 to the wall 42 of the battery compartment 36.

A gap 52 is arranged between the bottom side 30 of the support frame 6 and the top side of the bottom plate 32. The gap 52 extends substantially even between the bottom side 30 of the support frame 32 and the top side of the bottom plate 32. The gap 52 comprises a clearance, i.e. the distance between the bottom side of the support frame 32 and the top side of the bottom plate 32, of preferably between 5 mm to 25 mm. Hereby, the plurality of battery modules 12 may be efficiently protected.

Preferably, the respective battery modules 12 are leak tight. This allows for a connection of the battery compartment 36 and the bottom plate 32 to be non-leak tight and thus lowers the constructive requirements.

The exemplary embodiments/aspects of the present invention described in this specification are intended to be understood as disclosed both individually and in all combinations with each other. In particular, even the description of a feature encompassed by an embodiment - unless explicitly stated to the contrary - is not intended to be understood herein as implying that the feature is indispensable or essential to the function of the embodiment. The sequence of the process steps described in this specification is not mandatory; alternative sequences of the process steps are conceivable. The process steps can be implemented in various ways, for example, implementation in software (by program instructions), hardware or a combination of both is conceivable for implementing the process steps.

Terms used in the patent claims such as "comprising", "having", "including", "containing" and the like do not exclude further elements or steps. The wording "at least in part" or "substantially" covers both the case "in part" and the case "in full". The phrase "and/or" is intended to be understood to disclose both the alternative and the combination, thus "A and/or B" means "(A) or (B) or (A and B)". A plurality of entities, persons or the like means multiple entities, persons or the like in the context of this specification. The use of the indefinite article does not preclude a plural. A single device may perform the functions of multiple units or devices recited in the claims. Reference signs indicated in the patent claims are not to be regarded as limitations of the means and steps employed.

## Claims

1. Energy storage unit (4) for a vehicle, in particular for an electric vehicle, comprising:
- a plurality of battery modules (12), wherein the plurality of battery modules (12) is preferably substantially leak tight;
- at least one support structure (2) for mounting the plurality of battery modules (12) on the support structure (2), wherein the support structure (2) is detachably connectable to at least one battery compartment (36) of the vehicle; and
- at least one bottom plate (32) for closing the at least one battery compartment (36) towards a bottom side (30);
**characterized in that,**
- the at least one support structure (2) further comprises at least one support frame (6) for arranging the plurality of battery modules (12) substantially between the at least one support frame (6) and the at least one battery compartment (36).

2. Energy storage unit according to claim 1,
**characterized in that,**
- an open space and/or at least one gap (52), in particular at least one air gap, is arranged between the bottom side (30) of the at least one support structure (2), in particular the support frame(6), and the top side of the at least one bottom plate (32).

3. Energy storage unit according to claim 2,
**characterized in that,**
- the open space and/or gap (52) extends substantially even between the bottom side (30) of the at least one support structure (2), in particular the bottom side (30) of the at least one support frame (6), and the top side of the at least one bottom plate (32).

4. Energy storage unit according to claim 1 or 2,
**characterized in that,**
- the open space and/or gap (52) comprises a clearance of 5 mm to 25 mm, preferably a clearance of 7.5 mm to 20 mm, particular preferably a clearance of 10 mm to 15 mm, between the bottom side (30) of the at least one support structure (2), in particular the bottom side (30) of the at least one support frame (6), and the top side of the at least one bottom plate (32).

5. Energy storage unit according to one of the claims 1 to 4,
**characterized in that,**
- load-distributing material is arranged between the bottom side (30) of the at least one support structure (2) and the top side of the at least one bottom plate (32),
- wherein the load distributing material is preferably at least partly arranged in the open space and/or in the at least one gap (52).

6. Energy storage unit according to claim 5,
**characterized in that,**
- the load-distributing material comprises a foam structure and/or a panel-like structure; and/or
- the load distributing profile comprises a profile structure, in particular a honeycomb structure.

7. Energy storage unit according to one of the claims 1 to 6,
**characterized in that,**
- the at least one support structure (2) further comprises at least one longitudinal profile (10), wherein the at least one longitudinal profile (10) comprises at least one passage for arranging at least one cooling channel and/or connecting means for connecting, in particular for electrically connecting, the plurality of the battery modules.

8. Energy storage unit according to claim 7,
**characterized in that,**
- the plurality of battery modules (12) is connected to the at least one passage via connecting channels (34) respectively, wherein the connecting channels (34) preferably extend substantially perpendicular to the at least one longitudinal profile (10) and/ or the at least one passage.

9. Energy storage unit according to claim 7 or 8,
**characterized in that,**
- the at least one support structure (2) comprises at least one cross profile (24), preferably at least two cross profiles (24), and
- the at least one longitudinal profile (10) and the at least one cross profile (24) separate the support frame (6) into a plurality of battery cavities (26) for arranging the plurality of battery modules (12) on the support structure (2).

10. Energy storage unto according to claim 9,
**characterized in that,**
- at least a part of a bottom floor (28) of the battery cavities (26) is provided by the at least one support frame (6).

11. Energy storage according to one of the claims 1 to 10,
**characterized in that,**
- the at least one support structure (2), in particular at least one profile (10, 24) of the at least one support structure (2), is detachably connectable to the at least one battery compartment (36) of the vehicle via a screw connection.

12. Energy storage unit according to one of the claims 1 to 11,
**characterized in that,**
- the energy storage unit (4) further comprises at least one sensor for monitoring the status of the at least energy storage unit (4), in particular for monitoring the status of the at least one bottom plate (32).

13. Mounting arrangement for a vehicle, in particular for an electric vehicle, comprising:
- at least one energy storage unit (4) according to one of the claims 1 to 12; and
- at least one battery compartment (36).

14. Mounting arrangement according to claim 13,
**characterized in that,**
- the at least one battery compartment (36) comprises at least one receiving opening (40) for receiving the at least one energy storing unit (4),
- wherein the at least one receiving opening (40) preferably is surrounded by a wall (42), wherein the wall (42) preferably comprises a substantially rectangular cross-section, and at least one top surface (44).

15. Electric vehicle comprising:
- at least one mounting arrangement according to claim 13 or 14.

## Amended claims

### Amended claims in accordance with Rule 137(2) EPC.

1. Energy storage unit (4) for a vehicle, in particular for an electric vehicle, comprising:
- a plurality of battery modules (12), wherein the plurality of battery modules (12) is preferably substantially leak tight;
- at least one support structure (2) for mounting the plurality of battery modules (12) on the support structure (2), wherein the support structure (2) is detachably connectable to at least one battery compartment (36) of the vehicle; and
- at least one bottom plate (32) for closing the at least one battery compartment (36) towards a bottom side (30);
- wherein the at least one support structure (2) further comprises at least one support frame (6) for arranging the plurality of battery modules (12) substantially between the at least one support frame (6) and the at least one battery compartment (36);
- wherein the at least one support structure (2) further comprises:
at least one longitudinal profile (10), wherein the at least one longitudinal profile (10) comprises at least one passage for arranging at least one cooling channel and/or connecting means for connecting the plurality of the battery modules; and
at least one cross profile (24), wherein the at least one longitudinal profile (10) and the at least one cross profile (24) separate the support frame (6) into a plurality of battery cavities (26) for arranging the plurality of battery modules (12) on the support structure (2).

2. Energy storage unit according to claim 1,
**characterized in that,**
- an open space and/or at least one gap (52), in particular at least one air gap, is arranged between the bottom side (30) of the at least one support structure (2), in particular the support frame(6), and the top side of the at least one bottom plate (32).

3. Energy storage unit according to claim 2,
**characterized in that,**
- the open space and/or gap (52) extends substantially even between the bottom side (30) of the at least one support structure (2), in particular the bottom side (30) of the at least one support frame (6), and the top side of the at least one bottom plate (32).

4. Energy storage unit according to claim 1 or 2,
**characterized in that,**
- the open space and/or gap (52) comprises a clearance of 5 mm to 25 mm, preferably a clearance of 7.5 mm to 20 mm, particular preferably a clearance of 10 mm to 15 mm, between the bottom side (30) of the at least one support structure (2), in particular the bottom side (30) of the at least one support frame (6), and the top side of the at least one bottom plate (32).

5. Energy storage unit according to one of the claims 1 to 4,
**characterized in that,**
- load-distributing material is arranged between the bottom side (30) of the at least one support structure (2) and the top side of the at least one bottom plate (32),
- wherein the load distributing material is preferably at least partly arranged in the open space and/or in the at least one gap (52).

6. Energy storage unit according to claim 5,
**characterized in that,**
- the load-distributing material comprises a foam structure and/or a panel-like structure; and/or
- the load distributing profile comprises a profile structure, in particular a honeycomb structure.

7. Energy storage unit according to one of the claims 1 to 6,
**characterized in that,**
- the plurality of battery modules (12) is connected to the at least one passage via connecting channels (34) respectively, wherein the connecting channels (34) preferably extend substantially perpendicular to the at least one longitudinal profile (10) and/ or the at least one passage.

8. Energy storage unto according to one of the claims 1 to 7,
**characterized in that,**
- at least a part of a bottom floor (28) of the battery cavities (26) is provided by the at least one support frame (6).

9. Energy storage according to one of the claims 1 to 8,
**characterized in that,**
- the at least one support structure (2), in particular at least one profile (10, 24) of the at least one support structure (2), is detachably connectable to the at least one battery compartment (36) of the vehicle via a screw connection.

10. Energy storage unit according to one of the claims 1 to 9,
**characterized in that,**
- the energy storage unit (4) further comprises at least one sensor for monitoring the status of the at least energy storage unit (4), in particular for monitoring the status of the at least one bottom plate (32).

11. Mounting arrangement for a vehicle, in particular for an electric vehicle, comprising:
- at least one energy storage unit (4) according to one of the claims 1 to 10; and
- at least one battery compartment (36).

12. Mounting arrangement according to claim 11,
**characterized in that,**
- the at least one battery compartment (36) comprises at least one receiving opening (40) for receiving the at least one energy storing unit (4),
- wherein the at least one receiving opening (40) preferably is surrounded by a wall (42), wherein the wall (42) preferably comprises a substantially rectangular cross-section, and at least one top surface (44).

13. Electric vehicle comprising:
- at least one mounting arrangement according to claim 11 or 12.
